Europäisches Patentamt

European Patent Office

Office européen des brevets

(11) Veröffentlichungsnummer: **0 029 492**
A1

## (12) EUROPÄISCHE PATENTANMELDUNG

(21) Anmeldenummer: 80105639.1

(22) Anmeldetag: 19.09.80

(51) Int. Cl.³: **G 01 F 1/32**

(30) Priorität: 21.11.79 DE 2946944

(43) Veröffentlichungstag der Anmeldung:
03.06.81 Patentblatt 81/22

(84) Benannte Vertragsstaaten:
FR GB NL

(71) Anmelder: BOPP & REUTHER GMBH
Carl-Reuther-Strasse 1
D-6800 Mannheim 31(DE)

(72) Erfinder: Huthloff, Eckhard, Dr. Ing.
Schwibbogenplatz 2
D-8900 Augsburg(DE)

(54) Strömungsmesser.

(57) In einem vom Fluidstrom durchflossenen Rohrleitungsabschnitt (1) ist ein stabförmiger Störkörper (5) quer zur Strömung eingebaut, von dem sich Kármánwirbel ablösen, deren Frequenz durch ein Fühlelement (8,9) gemessen wird und ein Maß für die Strömungsgeschwindigkeit darstellt. Damit sich die Wirbel auch bei größeren Nennweiten gleichmäßig über die Störkörperlänge ablösen, ist der Rohrleitungsabschnitt (1) durch eine dünne Trennwand (2) in zwei Wirbelkammern (6, 7) unterteilt. Der Störkörper (5) verläuft mit seiner Längsachse senkrecht zur Trennwand (2) und das Fühlelement (8, 9) für den Abgriff der Wirbelfrequenz ist nur in einer der Wirbelkammern (6) eingebaut. Es können auch mehrere parallele Trennwände im Rohrleitungsabschnitt (1) vorgesehen werden.

Fig.2

EP 0 029 492 A1

Croydon Printing Company Ltd.

Strömungsmesser

Die Erfindung bezieht sich auf einen Strömungsmesser insbesondere für größere Nennweiten, bei dem in einem von einem Fluidstrom durchflossenen Rohrleitungsabschnitt ein stabförmiger Störkörper quer zur Strömung eingebaut ist, von dem sich Kármánwirbel ablösen, deren Frequenz ein Maß für die Strömungsgeschwindigkeit ist und durch ein Fühlelement gemessen wird.

Bei einem solchen als Wirbelzähler ausgebildeten Strömungsmesser besteht zwischen der Frequenz der erzeugten Kármánwirbel und der Strömungsgeschwindigkeit die Beziehung

$$f = S \cdot \frac{v}{b}$$

wobei f die Wirbelablösefrequenz, v die Strömungsgeschwindigkeit, b die charakteristische Breite des Störkörpers und S die Strouhalzahl ist. Der Querschnitt des Störkörpers legt die Strouhalzahl fest, die über einen großen Geschwindigkeitsbereich konstant ist, so daß auch das Verhältnis zwischen der Frequenz der erzeugten Kármánwirbel und der Strömungsgeschwindigkeit entsprechend linear ist. Optimale Wirbelsignale mit einer hohen Signalgüte und einem weiten Linearitätsbereich erhält man durch entsprechende Wahl des Störkörperquerschnittes und durch die geeignete Größe des Störkörpers im Verhältnis zum Rohrquerschnitt.

Aus der obengenannten Gleichung ist ersichtlich, daß die Wirbelablösefrequenz mit wachsender Störkörperbreite sinkt. Benutzt man beim Einbau des Wirbelzählers in Rohrleitungen mit zunehmend größerer Nennweite zur Erzielung der geometrischen Ähnlichkeit die gleiche oder ähnliche Querschnittsform des Störkörpers und das gleiche Flächenverhältnis des Störkörpers zur Rohrleitung wie bei kleinen Nennweiten, so bleibt zwar die Strouhalzahl gleich, jedoch sinkt mit wachsender Störkörperbreite die Frequenz der sich ablösenden Kármánwirbel, so daß der Abgriff der Wirbelfrequenz mit zunehmender Nennweite schwieriger wird. So läßt sich bei einer Nennweite von

250 mm noch ein einwandfreies Wirbelsignal erzielen, jedoch wird bei einer Nennweite von beispielsweise 600 mm die Wirbelfrequenz so niedrig, daß die Verarbeitung der Wirbelsignale in der angeschlossenen elektronischen Auswerteschaltung große Schwierigkeiten bereitet.

Würde man die Breite b des Störkörpers beim Einbau in große Rohrleitungen verringern, so ließe sich zwar entsprechend der vorgenannten Gleichung die Wirbelablösefrequenz f erhöhen, jedoch wäre hierdurch die Stabilität der Wirbelstraße gefährdet, da der Schlankheitsgrad des sich über den ganzen Rohrleitungsquerschnitt erstreckenden Störkörpers zu groß würde. Die Wirbel würden sich nämlich nicht mehr zylinderförmig, d. h. mit gleicher Phasenlage, über dem gesamten Störkörper ablösen, sondern es könnten infolge der schwachen Kopplung des Fluids verschiedene Ablösegebiete auftreten, in denen die Ablösung der Wirbel nicht mehr phasengleich erfolgt, wodurch es zu störenden Querströmungen kommt, die die Signalgüte und die Linearität verschlechtern.

Aufgabe der Erfindung ist es, den Wirbelzähler so auszubilden, daß auch beim Einbau in Rohrleitungen mit großer Nennweite ausreichend hohe Wirbelfrequenzen auftreten, ohne das der Schlankheitsgrad des Störkörpers und damit das Meßsignal verschlechtert wird.

Die Lösung dieser Aufgabe wird in den kennzeichnenden Merkmalen des Patentanspruches 1 gesehen.

Durch die vorgeschlagene Anordnung vorzugsweise einer mittleren dünnen Trennwand und die dadurch bedingte Unterteilung des den Störkörper tragenden Rohrleitungsabschnittes in zwei Wirbelkammern entsteht in jeder Wirbelkammer eine sich jeweils von einer Hälfte des Störkörpers ablösende separate Wirbelstraße. Der sich aus der Länge des Störkörpers im Verhältnis zu seiner Breite ergebende Schlankheitsgrad des Störkörpers wird hierbei um die Hälfte verringert, so daß die Wirbel sich jetzt eben und gleichmäßig ohne jede Phasenverschiebung von dem Störkörper ablösen und einen stabilen Rotationszylinder bilden.

Bei Wirbelzählern für große Nennweiten läßt sich dadurch
die Breite des Störkörpers bis auf die Hälfte verklein-ern,
so daß die Wirbelablösefrequenz verdoppelt wird und jetzt
groß genug ist, um sicher in der elektronischen Schaltung
ausgewertet zu werden. Eine Verschlechterung des Meßsignals
durch ungleichmäßige Wirbelablösungen und nachteilige Querströmungen in der Wirbelstraße kann durch die Unterteilung
des Störkörpers nicht mehr auftreten. Die eingebaute dünne
Trennwand erzeugt praktisch auch keinen zusätzlichen Strömungswiderstand, vielmehr läßt sich der Druckverlust im Rohrleitungsabschnitt sogar durch die mit der Erfindung erzielbare Verkleinerung der Störkörperbreite erheblich verringern.

Werden anstelle einer mittleren Trennwand mehrere parallele
Trennwände in dem den Störkörper tragenden Rohrleitungsabschnitt eingebaut, so läßt sich die Breite des Störkörpers
noch weiter verringern. so daß sich auch bei ganz großen
Nennweiten noch eine gute Wirbelablösung mit ausreichend
hoher Frequenz erzielen läßt.

Das Fühlelement für den Abgriff der Wirbelfrequenz braucht
entsprechend dem Merkmal des Patentanspruches 2 nur in einer
der Wirbelkammern des Rohrleitungsabschnittes eingebaut zu
werden, während der Störkörper sich über den ganzen Rohrleitungsquerschnitt erstreckt, damit eine symmetrische Strömung in der Rohrleitung erhalten bleibt.

Die mittlere Trennwand kann in einfacher Weise gemäß Patentanspruch 3 durch eine dünne rechteckförmige Blechscheibe
gebildet werden, die sich über die ganze Höhe der Rohrleitung
erstreckt und den Rohrleitungsquerschnitt im Wirkbereich des
Störkörpers in zwei Hälften unterteilt. Eine solche Blechscheibe läßt sich leicht in den Rohrleitungsabschnitt einbauen. Dadurch, daß der Störkörper im mittleren Bereich der

- 4 -

Blechscheibe angeordnet ist, liegt die Blechscheibe im Einflußbereich der Wirbelablösung, so daß Wechselwirkungen
zwischen den benachbarten Wirbelkammern vermieden werden.

Da der Ablösebereich der Wirbel sich nicht nach oben und
unten bis zur Rohrwand erstreckt, läßt sich gemäß Patentanspruch 4 auch eine rechteckförmige, kreisförmige oder ellipsenförmige Blechscheibe als Trennwand verwenden, die in der
Höhe oder im Durchmesser kleiner als der Rohrleitungsabschnitt
ausgebildet und in ihrem mittleren Bereich am Störkörper befestigt ist. Da die in der Mitte der Rohrleitung sitzende
Blechscheibe vom Störkörper selbst getragen wird, ist eine
besondere Befestigung an der Rohrwand nicht erforderlich.

Die Erfindung wird anhand zweier Ausführungsbeispiele erläutert, und zwar zeigt die Zeichnung in

Fig. 1   einen Rohrleitungsabschnitt mit Störkörper
         und eingebauter Trennwand im Längsschnitt,

Fig. 2   denselben Rohrleitungsabschnitt im Querschnitt nach Linie II - II der Fig. 1,

Fig. 3   einen Rohrleitungsabschnitt mit einer
         anderen Trennwand im Längsschnitt und

Fig. 4   diesen Rohrleitungsabschnitt im Querschnitt
         nach Linie IV - IV der Fig. 3.

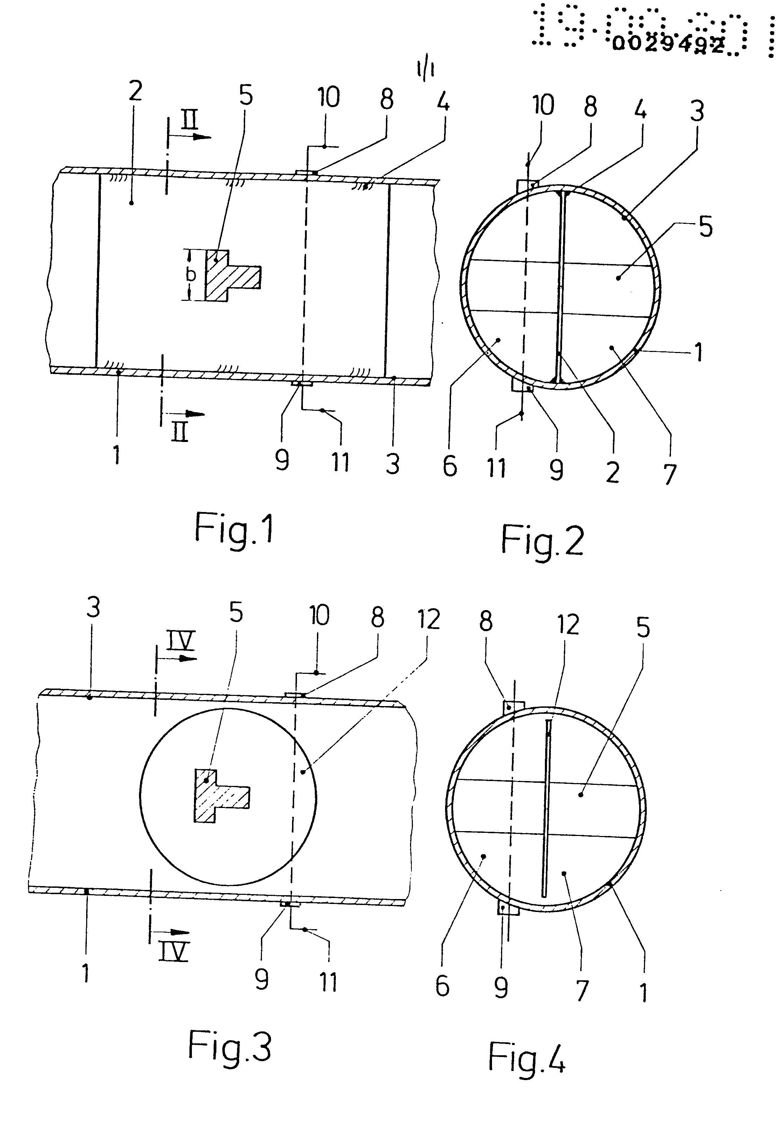

In dem in den Fig. 1 und 2 gezeigten Rohrleitungsabschnitt
1 ist in seiner Längsmittelebene als Trennwand eine rechteckige dünne Blechscheibe 2 eingesetzt, die sich über die
ganze Höhe der Rohrleitung, d. h. nach oben und unten bis
zur Rohrinnenwand 3 erstreckt und durch Schweißnähte 4 oder
eine andere Befestigung mit der Rohrinnenwand 3 verbunden
ist. Der Störkörper 5 verläuft mit seiner Längsachse senkrecht zur Trennwand 2 und erstreckt sich beiderseits der
Trennwand über die ganze Breite des Rohrleitungsabschnittes
1. Durch die Trennwand 2 ist der Rohrleitungsquerschnitt in

die beiden Wirbelkammern 6 und 7 unterteilt, in denen gleiche Strömungsverhältnisse herrschen, da der Störkörper 5 sich symmetrisch zur Trennwand 2 über beide Wirbelkammern 6 und 7 erstreckt.

Zur Abtastung der Kármánwirbel ist in der Wirbelkammer 6 in Strömungsrichtung hinter dem Störkörper eine aus einem Ultraschallsender 8 und einem Ultraschallempfänger 9 bestehende Ultraschalltaststrecke als Fühlelement vorgesehen, an die die zum Schallerzeuger führende Anschlußleitung lo und die zur Auswertschaltung führende Anschlußleitung 11 angeschlossen sind. Anstelle der Ultraschallstrecke können auch andere bekannte Fühlelemente Verwendung finden.

Der Störkörper 5 ist etwa im mittleren Bereich der Trennwand 2 angeordnet, so daß die in den Wirbelkammern 6 und 7 entstehenden Wirbel sich ohne gegenseitige Beeinflussung vom Störkörper 5 ablösen können. Dadurch wird die Wirbelablösung stabilisiert, so daß die Breite b des Störkörpers 5 bei gleichem Schlankheitsgrad bis auf die Hälfte verkleinert und damit die Frequenz der sich ablösenden Wirbel verdoppelt werden kann. Bei großen Rohrleitungs-Nennweiten treten dadurch ausreichend hohe, für die elektronische Abtastung geeignete Wirbelfrequenzen auf.

Bei dem Ausführungsbeispiel nach den Fig. 3 und 4 ist anstelle der sich über die ganze Höhe des Rohrleitungsabschnittes 1 erstreckenden rechteckförmigen Blechscheibe 2 eine runde dünne Blechscheibe 12 vorgesehen, die im Durchmesser kleiner als der Innendurchmesser des Rohrleitungsabschnittes 1 ist, so daß sie den Rohrquerschnitt nicht ganz in zwei Hälften teilt. Die runde Scheibe 12 ist so groß, daß sie die Wirbelkammern 6 und 7 im unmittelbaren Ablösebereich der Wirbel und auch in den benachbarten Randzonen ausreichend voneinander trennt, so daß keine gegenseitige Beeinflussung der Wirbel in den Wirbelkammern 6 und 7 auftreten kann. Diese runde Blechscheibe 12 läßt sich einfach herstellen und ist fest mit dem Störkörper 5 ver- bunden. Eine Befestigung an der Rohrwand 3 ist nicht erforderlich.

Patentansprüche

1. Strömungsmesser insbesondere für größere Nennweiten, bei dem in einem von einem Fluidstrom durchflossenen Rohrleitungsabschnitt ein stabförmiger Störkörper quer zur Strömung eingebaut ist, von dem sich Kármánwirbel ablösen, deren Frequenz ein Maß für die Strömungsgeschwindigkeit ist und durch ein Fühlelement gemessen wird, d a d u r c h   g e k e n n - z e i c h n e t, daß der Rohrleitungsabschnitt (1) durch eine in seiner Längsmittelebene angeordnete und sich über den Ablösebereich der Wirbel erstreckende dünne Trennwand (2, 12) oder gegebenenfalls durch mehrere Trennwände in zwei oder mehr Wirbelkammern (6, 7) unterteilt ist und der Störkörper (5) mit seiner Längsachse senkrecht zu der Trennwand (2, 12) oder den Trennwänden verläuft.

2. Strömungsmesser nach Anspruch 1, d a d u r c h   g e - k e n n z e i c h n e t, daß das Fühlelement (8, 9) für den Abgriff der Wirbelfrequenz nur in einer der Wirbelkammern (6, 7) des Rohrleitungsabschnittes (1) eingebaut ist.

3. Strömungsmesser nach den Ansprüchen 1 und 2, d a d u r c h   g e k e n n z e i c h n e t, daß die Trennwand als dünne rechteckförmige, sich über die Höhe des Rohrleitungsabschnittes (1) erstreckende und mit ihren Längsseiten an der Rohrwand (3) anliegende bzw. befestigte Blechscheibe (2) ausgebildet ist und der sich nach beiden Seiten quer zur Blechscheibe (2) erstreckende Störkörper (5) im mittleren Bereich der Blechscheibe (2) liegt.

4. Strömungsmesser nach den Ansprüchen 1 und 2, d a - d u r c h   g e k e n n z e i c h n e t, daß als Trennwand eine dünne rechteckförmige, kreisförmige oder ellipsenförmige Blechscheibe (12) vorgesehen ist, die in der Höhe oder im Durchmesser kleiner als der Rohrleitungsabschnitt (1) ausgebildet und in ihrem mittleren Bereich am Störkörper (5) befestigt ist.

Fig.1

Fig.2

Fig.3

Fig.4

# EUROPÄISCHER RECHERCHENBERICHT

**Europäisches Patentamt**

**0029492**

Nummer der Anmeldung

EP 80 10 5639

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 2 002 520 (RICARDO & CO) <br> * Seite 1, Zeile 95 bis Seite 2, Zeile 40; Seite 2, Zeilen 2-99; Figuren 3-5 * | 1,4 |
| A | US - A - 4 142 407 (H. KUROIWA et al.) <br> * Figur 9 * | 2 |

**KLASSIFIKATION DER ANMELDUNG (Int. Cl.³)**

G 01 F 1/32

**RECHERCHIERTE SACHGEBIETE (Int. Cl.³)**

G 01 F 1/32
G 01 P 5/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-02-1981 | NUYTEN |

EPA form 1503.1   06.78